# EUROPEAN PATENT SPECIFICATION

(11) **EP 3 466 742 B1**
(45) Date of publication and mention of the grant of the patent: **19.01.2022**
(21) Application number: 17792545.0
(22) Date of filing: 24.03.2017
(51) Int. Cl.: H02J 7/00, B60L 3/00, B60L 58/10, B60L 58/19, B60L 58/20, B60L 50/50

(54) **SYSTEM FOR MANAGING, IDENTIFYING AND INTERCONNECTING A PLURALITY OF PROPULSION BATTERIES OF AN ELECTRIC VEHICLE**
SYSTEM ZUR VERWALTUNG, IDENTIFIZIERUNG UND VERBINDUNG MEHRERER ANTRIEBSBATTERIEN EINES ELEKTRISCHEN FAHRZEUGS
SYSTÈME DE GESTION, DE DIAGNOSTIC ET D'INTERCONNEXION DE DIVERSES BATTERIES DE PROPULSION D'UN VÉHICULE ÉLECTRIQUE

(30) Priority: 02.05.2016 ES 201630567
(43) Date of publication of application: 10.04.2019
(73) Proprietor: Torrot Electric Europa, SA, 17190 Salt (Girona) (ES)
(72) Inventor: MELLADO HORCAS, Javier, 17190 Salt (Girona) (ES); ROJAS GUILLAMA, Borja, 17190 Salt (Girona) (ES)
(74) Representative: Padial Martinez, Ana Belen
(86) International application number: PCT/ES2017/070174
(87) International publication number: WO 2017/191339

(56) References cited:
- WO-A1-2015/181420
- CN-U- 202 080 273
- US-A1- 2007 090 803
- US-A1- 2013 020 970
- US-A1- 2013 020 970
- US-A1- 2014 368 041
- US-A1- 2015 369 867

## Description

### OBJECT OF THE INVENTION

The present invention describes an electric and electronic system for managing the powertrain of an electric vehicle, also including an integrated electronic diagnosis system for all the units comprising same. It is also provided with an operation and diagnosis data output, thereby allowing communication with the user and the technical assistance service.

### BACKGROUND OF THE INVENTION

Electric vehicles are provided with at least one drive motor that uses electric power from a group of interconnected batteries mounted on the vehicle itself. Although the features of the batteries used in a given vehicle are generally similar, there may be different types of batteries, as well as differences in the electrical power levels that they can reach or the parameters thereof, such as the self-discharge current. These differences mean that upon repeated charging and discharging cycles, some batteries will accumulate a greater charge than others while other batteries will discharge more than they should.

To extend battery lifetime as much as possible, it is advisable to maintain the batteries at all times within manufacturer specifications, which generally consist in cell voltage levels between a maximum and a minimum value. This is particularly important in certain types of battery such as lithium batteries, the lifetime of which can be greatly reduced if they are excessively charged or discharged.

The prior art includes, for example, document WO2015181420 which describes a system that measures the charge of each battery, its temperature and the charging/discharging current passing through it, and in view of these data determines whether it is necessary to dissipate part of the power supplied to a specific battery in a charging operation, or to take other actions. Document EP270158 describes a device for protection against overcurrent in a vehicle battery. US2013020970 discloses a system and methods for controlling an electric motor in an electric vehicle.

### DESCRIPTION OF THE INVENTION

In general, the systems that have been described relate to protection devices originating in other sectors where batteries are used, not from the automotive sector, and we are not aware of the disclosure of management and diagnosis systems that allow the user to decide which batteries will be used according to their state, as well as indicating the motor controller how to manage power according to the energy available and the conditions of the batteries at each time.

The system of the invention constantly evaluates these conditions to provide efficient energy management. In addition, electrical and mechanical safety variables are controlled and useful data for the user and technical service are generated.

It also provides communication functions necessary for sending data in an organized manner to the user and the technical service to allow monitoring the operation of the system, accessing vehicle use statistics, accessing the diagnosis, providing quick diagnostic services, sending spares, etc.

### Brief description of the drawings

The features and advantages of the invention will be made clearer in view of the detailed description. The details in both the description and the preferred embodiment are given by way of illustration, making reference to a possible example of an embodiment, without being limited to the details described herein. Accordingly, this description should be considered as illustrative and not limiting in any sense. The numerical references indicated in said sections makes references to the figures accompanying this document, where:
Figure 1 shows a functional block diagram of the devices that make up this management, diagnosis and interconnection system for several propulsion batteries of an electric vehicle.
Figure 2 shows a more detailed representation where the essential components of the various devices of the system are represented.

Preferred embodiment of the invention.

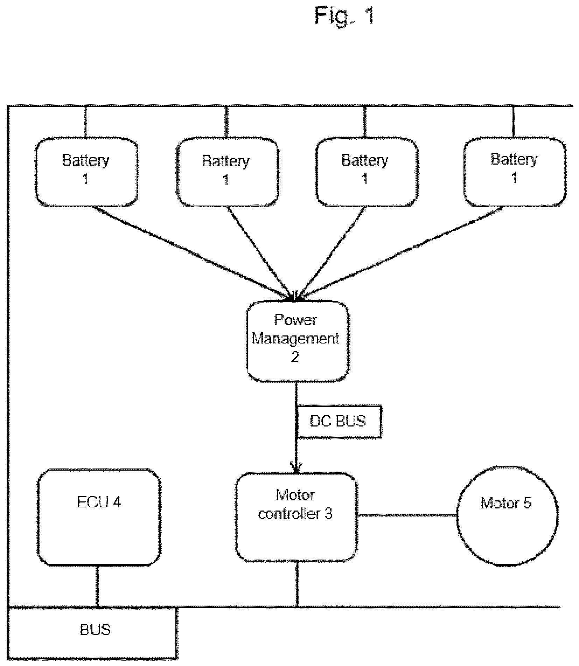

As shown in figure 1, the system of the invention comprises the following basic devices:
a) A series of batteries (1), which can be of different types, each of which comprises a group of cells (11), connected to a management system (BMS) and a series of communication interfaces with the rest of the system, a discharge connector (17) and a charge connector (16) with which the corresponding charger (7) is connected.
b) A power manager (2) that receives the power from each battery (1) and sends it to the motor controller (3) and the remaining units of the system: For each battery (1) there is an input channel (21) and a power switch (22) that allows enabling or disabling the power of the corresponding battery from the control unit (4).
c) A motor controller (3) that sends the power to the motor (5) through a power stage (34) according to the instructions of the user and the restrictions set by the control unit (4), which has a user control module (33) that receives instructions directly from the system and transmits these to a processor (31) that generates the appropriate signals for controlling the motor (5), as well as alarm signals and statistics, communicating them to an engine control unit ECU (4);
d) The engine control unit (ECU) (4) manages the entire system and determines how the energy is consumed according to the management algorithms and the user's requests; it includes a processor (42) that receives the mode change requests and, if admissible, sends the change command to the motor controller (3) and collects and represents on a display (41) diagnosis and operation data on all system components, as well as a series of communication interfaces with a user terminal (46), with system bus (BUS) and with diagnosis devices OBD;
e) Finally, the system includes a communications bus (BUS) that acts as a data link between all units for system operation.

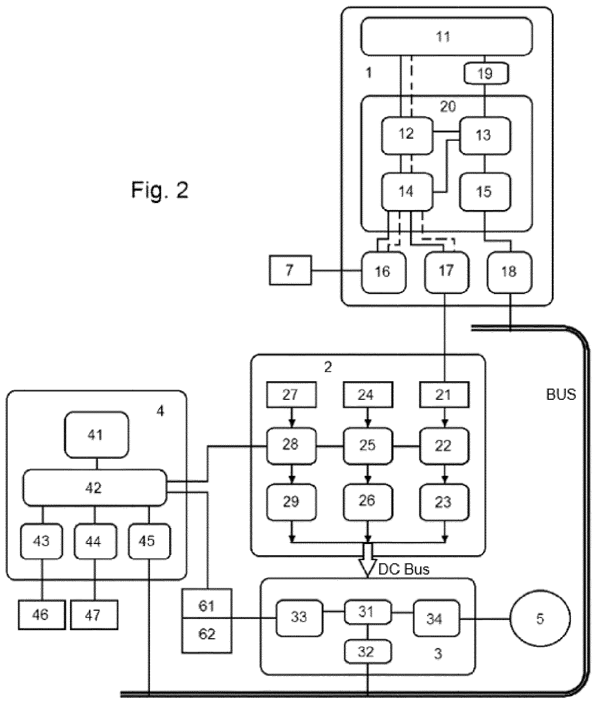

Figure 2 shows a more detailed representation of each of these devices.

The batteries (1) can be of different types, integrating all in an integrated electronic management device in charge of electrical protection of each battery, estimating the current status thereof, diagnosis of errors and calculation of use statistics. The functions are distributed in the following elements:
- A group of cells (11) connected in series and in parallel depending on the desired power and energy, present in each battery (1).
- A battery management system (BMS) (20) in each battery, with the following functions:
   ∘ Electrical protections (13) against overcurrents, short-circuits, out of range temperatures, loss of isolation, detection of internal cabling breaks, etc.
   ∘ Power switches (14) in charge of allowing or shutting off battery charging and discharging.
   ∘ It also includes an interface with the communications bus (15) to present data to the control unit.
   ∘ Calculation of battery states, estimating the charge stored in the battery and the available energy in it by means of sensors (12) for the current, cell voltage (19) and temperature.
   ∘ Calculation of use statistics.
   ∘ Generation of error and alarm states that are reported to the ECU through the system bus.
- Each battery includes a series of connectors to the rest of the system, namely:
   ∘ A discharge connector (17) that sends the energy to the power manager.
   ∘ A charge connector (16) that connects the individual charger to the battery (7).
   ∘ A communications connector that allows connecting the battery to the system communications bus.

The power management device (2) is the unit in charge of receiving energy from each battery (1) and sending the total power received to the motor controller (3) through the DC bus and the other units that need power. It is divided into various elements:
- An inlet channel (21, 24, 27) for each battery, connecting the battery to the management module.
- A power switch (22, 25, 28). For batteries without charge-discharge control via communications bus, power management allows enabling or disabling the power of each battery individually from the control unit (4).
- An anti-noise mechanism (23, 26, 29) for each channel that prevents uncontrolled currents from circulating between batteries.

The motor controller (3) send the power to the motor (5) according to the user's instructions and the restrictions set by the control unit (4). There is integrated diagnosis and communications via bus with the rest of the system.
- Signals are received through an interface (33) from the user controls (62), for example with the accelerator and brakes the user can indicate the propulsion system what to do, as this is the most direct way to send instructions to the system.
- A processor (31) that carries out several important tasks:
   ∘ It reads the user controls directly from the interface (33) in order to know the power, braking etc. requests.
   ∘ It is connected to a communications interface which communicates through the system bus with the control unit (4), receiving mode change commands to change from a higher power mode to an energy saving mode, for example.
   ∘ With the information from the preceding two items it generates the appropriate signals for controlling the motor, to which it connects through a power stage (34).
   ∘ The processor processes the various alarm states and reports them to the ECU (4), so that the latter can send diagnosis data to the outside.

An engine control unit (ECU) (4) is in charge of managing the entire system, determining how energy will be consumed according to the management algorithms and the user requests. This unit incorporates the following devices:
- A display (41) that shows data to the user in real time is the most direct form of communication with the system.
- A processor (42) that performs the following functions:
   ∘ Controls all propulsion system communications through the system bus (BUS).
   ∘ Receives mode change requests through a control (61) and, if admissible, sends the change command to the motor driver.
   ∘ Gathers error data on all components of the propulsion system to display diagnosis data in an orderly manner.
   ∘ Controls the display.
   ∘ Manages keyless start-up functions.
   ∘ Controls the power management module (2).
- This unit includes a wireless communications interface (43) that allows communicating via a Smartphone/Tablet/PC app (46) operation data, partial diagnosis for the user, full diagnosis for technical service, OBD on wireless protocols, etc.
- A communications interface (45) is in charge of communicating with the system bust, allowing internal operation of the propulsion system isolated from the wireless communications and the OBD system.
- It also includes the interface (44) with standard diagnostic devices OBD I/II (47).

A communications bus (BUS) establishes the data link between all the units in order to operate the system.

The basic operation of the machine is as follows: When the system is started the electronic control unit (4) can communicate with the various batteries (1) connected to the bus. In this way it can decide which batteries will be used according to their state, and indicate the motor controller (3) how to manage the power, in view of the available energy and the conditions of the batteries at each time. It is not necessary for all the batteries to be connected and charged for correct operation, nor for all to have the same charge level.

The system also admits the manual selection of the power mode provided the electronic control unit (4) considers that the selected mode can be used without problems. The normal operation of the system constantly evaluates these conditions for efficient energy management. Electrical and mechanical safety variables are also controlled, and data useful for the user and the technical service are generated:
- voltage, current and temperature of the batteries.
- Battery charge state.
- Remaining range.
- Energy consumption.
- Alarm states.
- Voltage, current and temperature of the motor controller.
- Controller alarm states.
- Controller operation modes.
- Temperature and rotation speed of the motor.
- Anti-theft and anti-tampering systems.
- Kilometres travelled.
- Stored errors.
- Other use statistics.

Both electronic management of each battery (1) and that of the motor controller (3), the motor (5), the power management unit (2) and the electronic control unit (4) have diagnoses of sensors, actuators and all internal elements. These data are sent to the electronic control unit U through the bus (BUS), which displays the data to the outside with various standard protocols: OBD, etc. This allows diagnosis of the propulsion system with standard tools, or specific manufacturer applications.

In addition, this system has a series of communications functions necessary for sending data in an organized manner to the user and the technical service.
- Via OBD protocol on cabled bus, as is usual in automation.
- Via CAN Bus or Bluetooth to a specific application for the technical service, with advanced functions available only to authorised persons.
- Via Bluetooth to a Smartphone or Tablet. With an application the user can see the operation of the system, access use statistics of the vehicle, access the diagnosis, etc.
- With an application the control unit can send diagnosis and operation data directly to the technical service via the data connection of the telephone or tablet, enabling an agile service to the user for diagnosis, sending spares, etc.

## Claims

1. System for managing, identifying and interconnecting a plurality of propulsion batteries of an electric vehicle , **characterized in that** it comprises:
a) a set of batteries (1), each one including the following elements:
- a group of cells (11) in each battery (1) consisting in a connection of cells in series and in parallel depending on the desired power and energy;
- a management system for each battery (1) that includes a current sensor (12), a processor (13) that performs circuit protection functions, manages the switches (14) in charge of controlling the charge and discharge of the battery (1), and also comprises an interface (15) with the communications bus (BUS) that provides data to the motor control unit (4) and calculates the state of the battery (1), generates use statistics and generates errors and alarm states; and
- a series of communications interfaces with the rest of the system among which are a discharge connector (17) that sends energy to the power manager (2), a charge connector (16) through which the charger (7) is connected to the battery (1), and a communications connector (18) that allows connecting the battery (1) to the system communications bus (BUS);
b) a power manager (2) that receives the energy from each battery (1) and is in charge of sending the energy received to the motor controller (3) and the remaining units of the system which, for each battery (1), is divided into the following elements:
- an input channel (21) that connects the battery (1) to the power manager (2),
- a power switch (22) that enables or disables the power of the corresponding battery (1) from the control unit (4), and
- an anti-noise device (23) that prevents uncontrolled currents circulating between the batteries (1);
c) a motor controller (3) that sends power to the motor (5) through a stage (34) according to the user's instructions and the restrictions set by the control unit (4), which has an integrated diagnosis and a communications interface (32) to the system bus (BUS); which comprises:
- a user control module (33) that receives direct orders from the system via the accelerator and brakes (62) with which the user indicates to the propulsion system which actions must be taken;
- a processor (31) that:
• reads the user controls (33) directly to know the power or braking requests;
• communicates through an interface (32) with the motor control unit (4) through the system bus (BUS), receiving commands for changing from a greater power mode to an energy saving mode, or vice versa,
• generates signals for controlling the motor (5) via a power unit (34), and
• generates alarms signals and controller statistics, reporting the various alarm states to the engine control unit (4);
d) an engine control unit (ECU) (4) that communicates with the batteries (1) connected to the bus (BUS) for deciding which batteries (1) to use according to their state and indicates to the motor controller (3) how to manage the power in view of the available energy and the conditions of the batteries (1) at each moment, which includes:
- a display (41) for presenting data to the user in real time,
- a processor (42) that controls the communications of the propulsion system through the system bus (BUS), receives change of mode requests and, if admissible, sends the change command to the motor controller (3); gathers error data on all components of the propulsion system displaying diagnosis data, manages keyless start-up functions, and controls the power manager (2);
- a wireless communications interface (43) through which the system communicates with a user terminal (46) to transmit operation data and diagnosis data.
- a communications interface (45) with the system bus (BUS) that allows the operation of the propulsion system, and
- a communications interface (44) with OBD diagnosis devices (47); and
e) a communications bus (BUS) that acts as a data link between all units for system operation.

## Patentansprüche

1. System zur Verwaltung, Identifizierung und Verbindung mehrerer Antriebsbatterien eines elektrischen Fahrzeugs, **dadurch gekennzeichnet, dass** es umfasst:
a) einen Satz Batterien (1), die jeweils die folgenden Elemente enthalten:
- eine Gruppe von Zellen (11) in jeder Batterie (1), die aus einer Reihen- und Parallelschaltung von Zellen in Abhängigkeit von der gewünschten Leistung und Energie besteht;
- ein Verwaltungssystem für jede Batterie (1), das einen Stromsensor (12), einen Prozessor (13) enthält, der Schaltungsschutzfunktionen durchführt, die Schalter (14) verwaltet, die für die Steuerung des Ladens und Entladens der Batterie (1) verantwortlich sind, und auch eine Schnittstelle (15) mit dem Kommunikationsbus (BUS) umfasst, die Daten an die Motorsteuereinheit (4) bereitstellt und den Zustand der Batterie (1) berechnet, Nutzungsstatistiken erzeugt und Fehler und Alarmzustände erzeugt; und
- eine Reihe von Kommunikationsschnittstellen mit dem Rest des Systems, darunter ein Entladeanschluss (17), der Energie an den Leistungsverwalter (2) sendet, ein Ladeanschluss (16), über den das Ladegerät (7) mit der Batterie verbunden ist (1), und ein Kommunikationsanschluss (18), der das Verbinden der Batterie (1) mit dem Systemkommunikationsbus (BUS) ermöglicht;
b) einen Leistungsverwalter (2), der die Energie von jeder Batterie (1) empfängt und dafür verantwortlich ist, die empfangene Energie an die Motorsteuerung (3) und die verbleibenden Einheiten des Systems zu senden, die für jede Batterie (1) in die folgenden Elemente aufgeteilt werden:
- einen Eingangskanal (21), der die Batterie (1) mit dem Leistungsverwalter (2) verbindet,
- einen Netzschalter (22), der die Leistung der entsprechenden Batterie (1) von der Steuereinheit (4) aktiviert oder deaktiviert, und
- eine Anti-Störungs-Vorrichtung (23), die unkontrollierte Ströme verhindert, die zwischen den Batterien (1) zirkulieren;
c) eine Motorsteuerung (3), die den Motor (5) über eine Stufe (34) gemäß den Anweisungen des Benutzers und den von der Steuereinheit (4) eingestellten Einschränkungen mit Leistung versorgt, die eine integrierte Diagnose und eine Kommunikationsschnittstelle (32) zu dem Systembus (BUS) aufweist; die umfasst:
- ein Benutzersteuermodul (33), das direkte Befehle von dem System über das Gaspedal und die Bremsen (62) empfängt, mit denen der Benutzer dem Antriebssystem anzeigt, welche Maßnahmen ergriffen werden müssen;
- einen Prozessor (31), der:
• die Benutzersteuerungen (33) direkt abliest, um die Leistungs- oder Bremsanforderungen zu kennen;
• über eine Schnittstelle (32) mit der Motorsteuereinheit (4) über den Systembus (BUS) kommuniziert und Befehle zum Wechsel von einem Modus mit höherer Leistung in einen Energiesparmodus empfängt oder umgekehrt,
• über ein Leistungseinheit (34) Signale zur Steuerung des Motors (5) erzeugt, und
• Alarmsignale und Steuerungsstatistiken erzeugt und die verschiedenen Alarmzustände an die Motorsteuereinheit (4) meldet;
d) eine Motorsteuereinheit (ECU, engine control unit) (4), die mit den mit dem Bus (BUS) verbundenen Batterien (1) kommuniziert, um zu entscheiden, welche Batterien (1) gemäß ihrem Zustand verwendet werden sollen, und der Motorsteuerung (3) anzeigt, wie die Leistung im Hinblick auf die verfügbare Energie und den Zustand der Batterien (1) zu jedem Zeitpunkt zu verwalten ist, die enthält:
- eine Anzeige (41) zum Darstellen von Daten für den Benutzer in Echtzeit,
- einen Prozessor (42), der die Kommunikation des Antriebssystems über den Systembus (BUS) steuert, Modusänderungsanforderungen empfängt und, falls zulässig, den Änderungsbefehl an die Motorsteuerung (3) sendet; Fehlerdaten zu allen Komponenten des Antriebssystems sammelt, die Diagnosedaten anzeigen, schlüssellose Startfunktionen verwaltet und den Leistungsverwalter (2) steuert;
- eine drahtlose Kommunikationsschnittstelle (43), über die das System mit einer Benutzerstation (46) kommuniziert, um Betriebsdaten und Diagnosedaten zu übertragen,
- eine Kommunikationsschnittstelle (45) mit dem Systembus (BUS), die den Betrieb des Antriebssystems ermöglicht, und
- eine Kommunikationsschnittstelle (44) mit OBD-Diagnosevorrichtungen (47); und
e) einen Kommunikationsbus (BUS), der als Datenverbindung zwischen allen Einheiten für den Systembetrieb dient.

## Revendications

1. Système de gestion, de diagnostic et d'interconnexion de diverses batteries de propulsion d'un véhicule électrique, **caractérisé en ce qu'**il comprend :
a) un ensemble de batteries (1), chacune comprenant les éléments suivants :
- un groupe de cellules (11) dans chaque batterie (1) consistant en une connexion de cellules en série et en parallèle en fonction de la puissance et de l'énergie souhaitées ;
- un système de gestion pour chaque batterie (1) qui comprend un capteur de courant (12), un processeur (13) qui assure des fonctions de protection des circuits, gère les interrupteurs (14) chargés de contrôler la charge et la décharge de la batterie (1) et comprend également une interface (15) avec le bus de communication (BUS) qui fournit des données à l'unité de commande du moteur (4) et calcule l'état de la batterie (1), génère des statistiques d'utilisation et génère des erreurs et des états d'alarme ; et
- une série d'interfaces de communication avec le reste du système parmi lesquelles se trouvent un connecteur de décharge (17) qui envoie de l'énergie au gestionnaire de puissance (2), un connecteur de charge (16) à travers lequel le chargeur (7) est connecté à la batterie (1) et un connecteur de communication (18) qui permet de connecter la batterie (1) au bus de communication du système (BUS) ;
b) un gestionnaire de puissance (2) qui reçoit l'énergie de chaque batterie (1) et est chargé d'envoyer l'énergie reçue au contrôleur de moteur (3) et aux unités restantes du système qui, pour chaque batterie (1), est divisé en les éléments suivants :
- un canal d'entrée (21) qui connecte la batterie (1) au gestionnaire de puissance (2),
- un interrupteur d'alimentation (22) qui active ou désactive l'alimentation de la batterie correspondante (1) à partir de l'unité de commande (4) et
- un dispositif anti-bruit (23) qui empêche les courants incontrôlés de circuler entre les batteries (1) ;
c) un contrôleur de moteur (3) qui envoie la puissance au moteur (5) à travers un étage (34) selon les instructions de l'utilisateur et les restrictions définies par l'unité de commande (4), qui a un diagnostic intégré et une interface de communication (32) au bus système (BUS) ; qui comprend :
- un module de commande utilisateur (33) qui reçoit des ordres directs du système par le biais de l'accélérateur et des freins (62) avec lesquels l'utilisateur indique au système de propulsion quelles actions doivent être entreprises ;
- un processeur (31) qui :
• lit directement les commandes utilisateur (33) pour connaître les demandes de puissance ou de freinage ;
• communique par le biais d'une interface (32) avec l'unité de commande de moteur (4) à travers le bus système (BUS), en recevant des commandes pour passer d'un mode de plus grande puissance à un mode d'économie d'énergie ou inversement,
• génère des signaux pour commander le moteur (5) par l'intermédiaire d'une unité de puissance (34) et
• génère des signaux d'alarme et des statistiques de contrôleur, signalant les divers états d'alarme à l'unité de commande du moteur (4) ;
d) une unité de commande du moteur (ECU) (4) qui communique avec les batteries (1) connectées au bus (BUS) pour décider quelles batteries (1) utiliser en fonction de leur état et indique au contrôleur de moteur (3) comment gérer la puissance compte tenu de l'énergie disponible et de l'état des batteries (1) à chaque instant, qui comprend :
- un affichage (41) pour présenter des données à l'utilisateur en temps réel,
- un processeur (42) qui contrôle les communications du système de propulsion à travers le bus système (BUS), reçoit les demandes de changement de mode et, en cas d'admissibilité, envoie la commande de changement au contrôleur de moteur (3) ; rassemble des données d'erreur sur tous les composants du système de propulsion affichant des données de diagnostic, gère les fonctions de démarrage sans clé et contrôle le gestionnaire de puissance (2) ;
- une interface de communication sans fil (43) par le biais de laquelle le système communique avec un terminal utilisateur (46) pour transmettre des données de fonctionnement et des données de diagnostic,
- une interface de communication (45) avec le bus système (BUS) qui permet le fonctionnement du système de propulsion et
- une interface de communication (44) avec des dispositifs de diagnostic OBD (47) ; et
e) un bus de communication (BUS) qui agit comme une liaison de données entre toutes les unités pour le fonctionnement du système.
